# EUROPEAN PATENT APPLICATION

(11) **EP 4 738 659 A1**
(43) Date of publication of application: **06.05.2026**
(21) Application number: 24882596.0
(22) Date of filing: 01.08.2024
(51) Int. Cl.: H02K 1/2791, H02K 1/28, H02K 1/04, H02K 21/22, F04B 35/04, F04B 39/12

(54) **OUTER ROTOR AND COMPRESSOR HAVING SAME**

(30) Priority: 24.10.2023 KR 20230142949
(71) Applicant: Samsung Electronics Co., Ltd., Suwon-si, Gyeonggi-do 16677 (KR)
(72) Inventor: KIM, Jonggun, Suwon-si, Gyeonggi-do 16677 (KR); HWANG, Incheol, Suwon-si, Gyeonggi-do 16677 (KR); PARK, Jungwoo, Suwon-si, Gyeonggi-do 16677 (KR)
(74) Representative: Walaski, Jan Filip
(86) International application number: PCT/KR2024/011297
(87) International publication number: WO 2025/089567

(57) **Abstract**

An outer rotor for a compressor includes a core formed in a hollow cylindrical shape, a plurality of permanent magnets disposed on an inner circumferential surface of the core, a roof disposed to cover one end of the core and including a bush hole formed at a center of the roof, and a bush disposed in the bush hole of the roof. The core and the bush are made of a metal material, and the roof is made of a resin material. The roof includes at least one inner notch formed on an inner circumferential surface of the bush hole and at least one outer notch formed on an outer circumferential surface of the roof.

## Description

### [Technical Field]

The disclosure relates to a compressor, and more particularly, to a compressor having an outer rotor.

### [Background Art]

A compressor is a mechanical device that compresses incoming gas, increases the pressure of the gas, and discharges the compressed gas. The compressor may be classified into a reciprocating type compressor and a rotating type compressor according to their operating principles.

The rotating type compressor may include a rotary compressor and a scroll compressor.

The reciprocating type compressor may include a reciprocating compressor that converts a rotational motion of a motor into a linear reciprocating motion of a piston using a crank shaft and a connecting rod so as to suck, compress, and discharge gas.

Generally, the reciprocating compressor uses an inner rotor motor to generate rotational force.

However, because the inner rotor motor has a rotor disposed inside a stator, the moment of inertia of the rotor may be limited by the size of the stator.

To increase the moment of inertia of the rotor, an outer rotor motor may be used in a reciprocating compressor. The outer rotor motor may include a stator and an outer rotor disposed outside the stator.

### [Disclosure of Invention]

### [Technical Solution]

Aspects of the disclosure are to address at least the above-mentioned problems and/or disadvantages and to provide at least the advantages described below. Accordingly, an aspect of the disclosure is to provide a compressor having an outer rotor.

Additional aspects will be set forth in part in the description which follows and, in part, will be apparent from the description, or may be learned by practice of the presented embodiments.

In accordance with an aspect of the disclosure, an outer rotor for a compressor is provided. The outer rotor includes a core formed in a hollow cylindrical shape, a plurality of permanent magnets disposed on an inner circumferential surface of the core, a roof disposed to cover one end of the core and including a bush hole formed at a center of the roof, and a bush disposed in the bush hole of the roof, wherein the core and the bush is made of a metal material, and the roof is made of a resin material, and wherein the roof includes at least one inner notch formed on an inner circumferential surface of the bush hole, and at least one outer notch formed on an outer circumferential surface of the roof.

According to one or more embodiments of the disclosure, the at least one outer notch may be formed to expose a portion of the core and the plurality of permanent magnets.

According to one or more embodiments of the disclosure, the at least one outer notch may be formed in a channel shape. The at least one outer notch may have a width of at least 1.0 mm.

According to one or more embodiments of the disclosure, the at least one inner notch may be formed to expose a portion of the bush.

According to one or more embodiments of the disclosure, the at least one inner notch may be formed in a channel shape. The at least one inner notch may have a width of at least 0.2 mm.

According to one or more embodiments of the disclosure, the at least one inner notch may include three inner notches.

According to one or more embodiments of the disclosure, the at least one outer notch may include three outer notches.

In accordance with another aspect of the disclosure, a core is provided. The core includes a plurality of magnet supports formed at regular intervals on an inner circumferential surface, wherein each of the plurality of magnet supports includes a through hole formed in a longitudinal direction of the core, and wherein the roof further includes a plurality of extension parts extending from one surface of the roof in contact with the core and passing through holes of the plurality of magnet supports, and a support ring having a ring shape and disposed at lower ends of the plurality of extension parts to cover another end of the core and other ends of the plurality of permanent magnets.

According to one or more embodiments of the disclosure, the core and the bush may be made of steel. The roof may be made of polybutylene teleptite PBT.

According to one or more embodiments of the disclosure, the roof may include a plurality of assembly holes formed adjacent to an edge thereof.

In accordance with another aspect of the disclosure, a compressor is provided. The compressor includes a casing, an outer rotor rotatably disposed inside the casing, and a stator disposed inside the outer rotor, wherein the outer rotor includes a core formed in a hollow cylindrical shape, a plurality of permanent magnets disposed on an inner circumferential surface of the core, a roof disposed to cover one end of the core and including a bush hole formed at a center of the roof, and a bush disposed in the bush hole of the roof, wherein the core and the bush is made of a metal material, and the roof is made of a resin material, and wherein the roof includes at least one inner notch formed on an inner circumferential surface of the bush hole, and at least one outer notch formed on an outer circumferential surface of the roof.

### [Brief Description of Drawings]

These and/or other aspects, features, and advantages of certain embodiments of the disclosure will be more apparent from the following description taken in conjunction with the accompanying drawings, in which:
FIG. 1 is a perspective view illustrating a compressor according to one or more embodiments of the disclosure.
FIG. 2 is a cross-sectional view illustrating a compressor according to one or more embodiments of the disclosure.
FIG. 3 is an enlarged partial cross-sectional view illustrating a motor of the compressor of FIG. 2.
FIG. 4 is a perspective view illustrating an outer rotor used in a compressor according to one or more embodiments of the disclosure.
FIG. 5 is a perspective view illustrating the outer rotor of FIG. 4 turned over.
FIG. 6 is a cross-sectional view illustrating the outer rotor of FIG. 4 taken along line A-A.
FIG. 7 is a cross-sectional view illustrating the outer rotor of FIG. 4 taken along line B-B.
FIG. 8 is an exploded perspective view illustrating the outer rotor of FIG. 4.
FIG. 9 is a bottom view of the outer rotor of FIG. 4.
FIG. 10 is a perspective view illustrating a core of an outer rotor according to one or more embodiments of the disclosure.
FIG. 11 is a perspective view illustrating a roof of an outer rotor according to one or more embodiments of the disclosure.
FIG. 12 is a perspective view illustrating a bush according to one or more embodiments of the disclosure.
FIG. 13 is a perspective view illustrating an outer rotor without an outer notch and an inner notch.
The same reference numerals are used to represent the same elements throughout the drawings.

### [Best Mode for Carrying out the Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In this document, each of phrases such as "A or B," "at least one of A and B," "at least one of A or B," "A, B, or C," "at least one of A, B, and C," "at least one of A, B, C" may include any one of the items listed together with the corresponding phrase, or any possible combination thereof.

The term "and/or" includes any element of a plurality of related described elements or a combination of a plurality of related described elements.

Terms such as "first," "second," "primary," or "secondary" may be used simply to distinguish one component from other components, and do not limit the corresponding components in other respects (e.g., importance or order).

When it is mentioned that one (e.g., first) component is "coupled" or "connected" to another (e.g., second) component with or without terms "functionally" or "communicatively", it means that the one component can be connected to the another component directly (e.g., wired), wirelessly, or through a third component.

Terms such as "include" or "have" are intended to designate the presence of features, numbers, steps, operations, components, parts, or combinations thereof described in the embodiment of the disclosure, but do not preclude the presence or addition of one or more other features, numbers, steps, operations, components, parts, or combination thereof.

When a component is said to be "connected," "coupled," "supported," or "in contact" with another component, this means not only cases where the components are directly connected, coupled, supported, or contacted, but also cases where the components are indirectly connected, coupled, supported, or contacted through a third component.

When a component is said to be located "on" other component, this includes not only cases where the component is in contact with the other component, but also cases where another component exits between the two components.

Further, the terms 'leading end', 'rear end', 'upper side', 'lower side', 'top end', 'bottom end', etc. used in the disclosure are defined with reference to the drawings. However, the shape and position of each component are not limited by the terms.

It should be appreciated that the blocks in each flowchart and combinations of the flowcharts may be performed by one or more computer programs which include computer-executable instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g., a central processing unit (CPU)), a communication processor (CP, e.g., a modem), a graphical processing unit (GPU), a neural processing unit (NPU) (e.g., an artificial intelligence (AI) chip), a wireless-fidelity (Wi-Fi) chip, a Bluetooth^{™} chip, a global positioning system (GPS) chip, a near field communication (NFC) chip, connectivity chips, a sensor controller, a touch controller, a finger-print sensor controller, a display drive integrated circuit (IC), an audio CODEC chip, a universal serial bus (USB) controller, a camera controller, an image processing IC, a microprocessor unit (MPU), a system on chip (SoC), an IC, or the like.

The disclosure relates to a compressor that uses an outer rotor motor including an outer rotor and a stator, and can prevent noise and vibration from worsening by preventing cracks in the outer rotor.

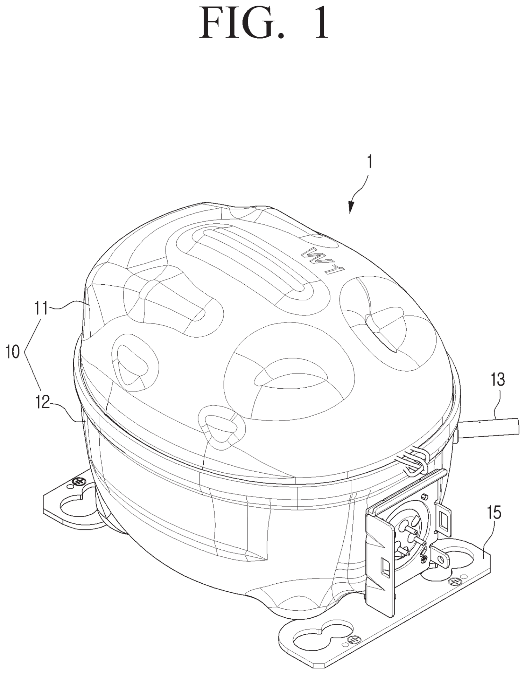

FIG. 1 is a perspective view illustrating a compressor according to one or more embodiments of the disclosure.

Referring to FIG. 1, a compressor 1 according to one or more embodiments of the disclosure may include a casing 10.

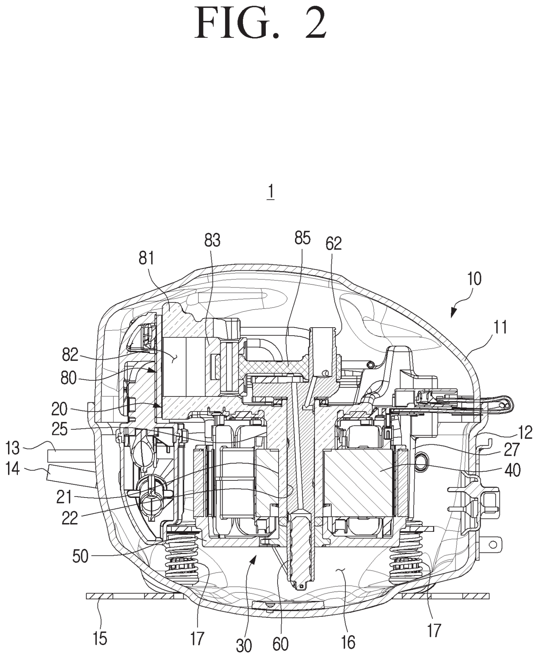

The casing 10 forms the exterior of the compressor 1. The casing 10 is formed as a sealed container. The casing 10 may include a refrigerant inlet pipe 13 through which refrigerant flows in and a refrigerant discharge pipe 14 through which the refrigerant is discharged (see FIG. 2).

The compressor 1 may form a refrigeration cycle with a condenser, an expansion valve, and an evaporator. In this case, the refrigerant inlet pipe 13 may be connected to the evaporator, and the refrigerant discharge pipe 14 may be connected to the condenser.

The casing 10 may include an upper casing 11 and a lower casing 12. The upper casing 11 is coupled to the upper end of the lower casing 12 to form the casing 10.

The joint portion of the upper casing 11 and the lower casing 12 is sealed.

The lower casing 12 is provided with the refrigerant inlet pipe 13 and the refrigerant discharge pipe 14. The refrigerant inlet pipe 13 and the refrigerant discharge pipe 14 communicate with a compression part 80 disposed inside the casing 10.

Low-temperature/low-pressure refrigerant may flow into the refrigerant inlet pipe 13. The high-temperature/high-pressure refrigerant compressed in the compression part 80 may be discharged to the outside of the casing 10 through the refrigerant discharge pipe 14.

A base 15 supporting the casing 10 may be provided at the bottom of the lower casing 12. The compressor 1 may be disposed perpendicular to a support surface by the base 15.

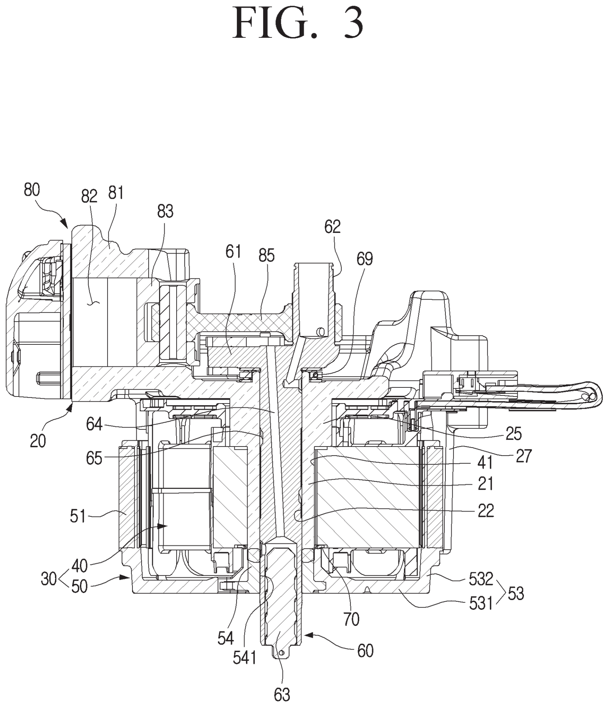

FIG. 2 is a cross-sectional view illustrating a compressor according to one or more embodiments of the disclosure. FIG. 3 is an enlarged partial cross-sectional view illustrating a motor of the compressor of FIG. 2.

Referring to FIGS. 2 and 3, the compressor 1 according to one or more embodiments of the disclosure may include a casing 10, a bearing block 20, a motor 30, and a compression part 80.

The casing 10 forms the exterior of the compressor 1 and may be formed as a sealed container. The bearing block 20, the motor 30, and the compression part 80 may be disposed inside the casing 10. The casing 10 may include a lower casing 12 and an upper casing 11 covering the upper side of the lower casing 12.

The casing 10 is formed by coupled the upper casing 11 and the lower casing 12. The inside of the casing 10 except the refrigerant inlet pipe 13 and the refrigerant discharge pipe 14 may be sealed. For example, the refrigerant may flow into the inside of the casing 10 through the refrigerant inlet pipe 13, and may be discharged to the outside of the casing 10 through the refrigerant discharge pipe 14.

An oil reservoir 16 containing oil may be provided in the lower portion of the lower casing 12.

The bearing block 20 is disposed inside the casing 10. The motor 30 may be disposed below the bearing block 20, and the compression part 80 may be disposed at the upper side of the bearing block 20.

The bearing block 20 may be disposed at the bottom of the lower casing 12. The bearing block 20 may be supported by a pair of elastic supports 17 disposed at the bottom of the lower casing 12.

Referring to FIGS. 2 and 3, the bearing block 20 may include a fixed shaft 21. The fixed shaft 21 may be formed to extend vertically downward from the lower surface of the bearing block 20. The fixed shaft 21 may be formed in a cylindrical shape.

A shaft hole 22 may be formed inside the fixed shaft 21. The shaft hole 22 may be formed with a circular cross-section. The shaft hole 22 is formed to penetrate the fixed shaft 21 and the bearing block 20 vertically.

The outer circumferential surface of the fixed shaft 21 and the shaft hole 22 may be formed to be concentric.

A stator 40 is disposed on the outer circumferential surface of the fixed shaft 21, and a rotating shaft 60 is inserted into the shaft hole 22 of the fixed shaft 21.

The inner circumferential surface of the shaft hole 22 is surface processed to function as a bearing that supports the rotation of the rotating shaft 60. Accordingly, the rotating shaft 60 may rotate relative to the fixed shaft 21 while inserted into the shaft hole 22.

Accordingly, the center of the stator 40 and the center of the rotating shaft 60, that is, the center of an outer rotor 50, may be aligned by the fixed shaft 21.

A rotation prevention portion 25 may be provided between the fixed shaft 21 and the lower surface of the bearing block 20. The rotation prevention portion 25 may be formed to prevent the stator 40 from rotating with respect to the fixed shaft 21.

The bearing block 20 may include a pair of legs 27 extending downward from the lower surface thereof. The pair of legs 27 may be formed symmetrically about the fixed shaft 21. For example, the fixed shaft 21 may be provided between the pair of legs 27.

To prevent interference with the stator 40 disposed on the fixed shaft 21 and the outer rotor 50 disposed outside the stator 40, the inner surfaces of the pair of legs 27 may be formed as a concave curved surface corresponding to the outer circumferential surface of the outer rotor 50. The inner surfaces of the pair of legs 27 are spaced apart from the outer circumferential surface of the outer rotor 50 by a defined distance.

The lower surfaces of the pair of legs 27 may be supported by the pair of elastic supports 17. The upper end of the elastic support 17 may be fixed to the lower surface of the leg 27, and the lower end of the elastic support 17 may be fixed to the bottom of the lower casing 12. Each of the pair of elastic supports 17 may be formed of a coil spring.

The motor 30 may be disposed below the bearing block 20. The motor 30 may be configured to generate a rotational force that operates the compression part 80. The motor 30 may include the stator 40 and the outer rotor 50.

The stator 40 may be disposed on the lower surface of the bearing block 20. The stator 40 may include a stator core and a coil. The stator core may be formed by laminating press-processed thin iron plates.

The stator 40 may include a coupling hole 41. The coupling hole 41 is formed at the center of the stator 40, that is, at the center of the stator core. The fixed shaft 21 of the bearing block 20 may be inserted into the coupling hole 41.

The stator 40 may be fixed to the fixed shaft 21. The stator 40 may be fixed to the fixed shaft 21 by a holder 70. The holder 70 may be disposed on the outer circumferential surface of the fixed shaft 21. When the holder 70 is fixed to the fixed shaft 21, the stator 40 may be fixed to the bearing block 20. When the stator 40 is fixed to the fixed shaft 21 by the holder 70, the stator 40 may not move up and down with respect to the fixed shaft 21.

The outer rotor 50 is disposed outside the stator 40. For example, the stator 40 is disposed inside the outer rotor 50. Accordingly, the outer rotor 50 may rotate around the stator 40 outside of the stator 40.

The outer rotor 50 may be fixed to one end of the rotating shaft 60. Therefore, when the outer rotor 50 rotates, the rotating shaft 60 may rotate integrally with the outer rotor 50.

The outer rotor 50 may be formed in a circular container shape. In other words, the outer rotor 50 may be formed in a hollow cylindrical shape with one end closed and the other end open. The stator 40 may be accommodated inside the outer rotor 50.

The rotating shaft 60 is inserted into the shaft hole 22 of the fixed shaft 21 of the bearing block 20. The rotating shaft 60 is rotatably supported by the shaft hole 22. Accordingly, when the outer rotor 50 rotates, the rotating shaft 60 may rotate inside the shaft hole 22 of the fixed shaft 21.

A head part 61 is provided at the top of the rotating shaft 60. The head part 61 is formed to have a diameter larger than the diameter of the rotating shaft 60. The head part 61 is formed to rotate integrally with the rotating shaft 60.

A bearing 69 is disposed between the head part 61 and the upper surface of the bearing block 20. Accordingly, when the rotating shaft 60 rotates, the head part 61 may rotate with respect to the upper surface of the bearing block 20.

A crank shaft 62 is provided on the upper surface of the head part 61. The crank shaft 62 is formed perpendicular to the upper surface of the head part 61. The crank shaft 62 is formed to be eccentric with the rotating shaft 60. For example, the center line of the rotating shaft 60 is spaced apart from the center line of the crank shaft 62 by a defined distance. A connecting rod 85 may be connected to the crank shaft 62.

An oil pump 63 may be disposed at the lower portion of the rotating shaft 60. The lower portion of the rotating shaft 60 in which the oil pump 63 is disposed is integrally coupled with the outer rotor 50. The lower end of the rotating shaft 60 may protrude below the outer rotor 50 and be submerged in the oil reservoir 16.

The rotating shaft 60 may include an oil supply passage. The oil supply passage may include a first oil passage 64 formed to vertically penetrate the rotating shaft 60 and a second oil passage 65 formed in a helical shape on the outer circumferential surface of the rotating shaft 60.

Accordingly, when the rotating shaft 60 rotates, the oil in the oil reservoir 16 may be supplied upward by the oil pump 63. Some of the oil supplied by the oil pump 63 may be supplied to the upper side of the rotating shaft 60 along the first oil passage 64. In addition, the remaining oil may be supplied between the outer circumferential surface of the rotating shaft 60 and the inner circumferential surface of the shaft hole 22 through the second oil passage 65.

The compression part 80 may be configured to compress and discharge the refrigerant introduced through the refrigerant inlet pipe 13. The compression part 80 may be provided on the upper surface of the bearing block 20.

The compression part 80 may include a cylinder block 81, a piston 83, and a connecting rod 85.

The cylinder block 81 is formed on the upper surface of the bearing block 20. A compression chamber 82 having a circular cross-section is formed inside the cylinder block 81. An inlet valve and a discharge valve are provided at the outer end of the cylinder block 81.

The piston 83 is inserted into the hollow of the cylinder block 81. The piston 83 is formed to linearly reciprocate a defined distance along the inner surface of the compression chamber 82 of the cylinder block 81.

The piston 83 is connected to one end of the connecting rod 85. The other end of the connecting rod 85 is connected to the crank shaft 62 of the rotating shaft 60. Accordingly, when the rotating shaft 60 rotates, the piston 83 may make a linear reciprocating motion in the compression chamber 82 of the cylinder block 81 by the crank shaft 62 and the connecting rod 85.

When the piston 83 makes a linear reciprocating motion in the compression chamber 82 of the cylinder block 81, the refrigerant may flow into the compression chamber 82 through the inlet valve, be compressed, and then be discharged to the outside of the compression chamber 82 through the discharge valve.

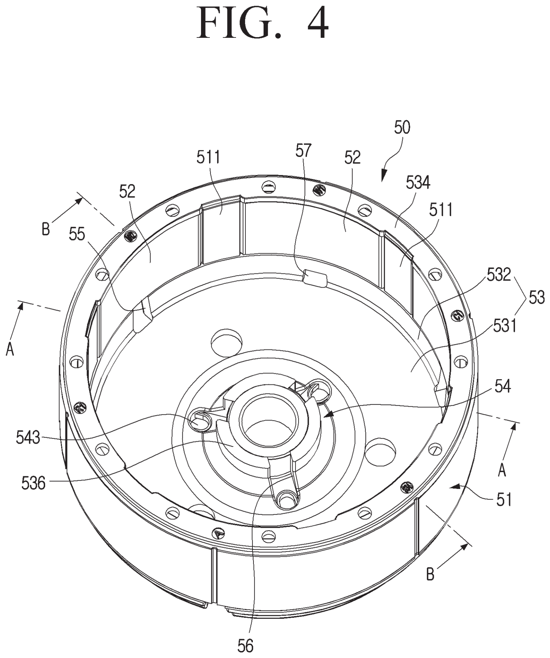

Hereinafter, the outer rotor 50 used in the compressor 1 according to one or more embodiments of the disclosure will be described with reference to FIGS. 4 to 12.

FIG. 4 is a perspective view illustrating an outer rotor used in a compressor according to one or more embodiments of the disclosure.

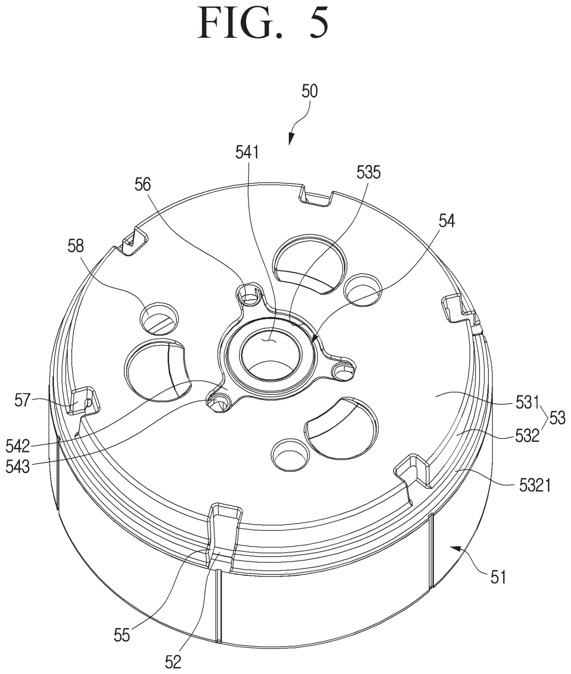

FIG. 5 is a perspective view illustrating the outer rotor of FIG. 4 turned over.

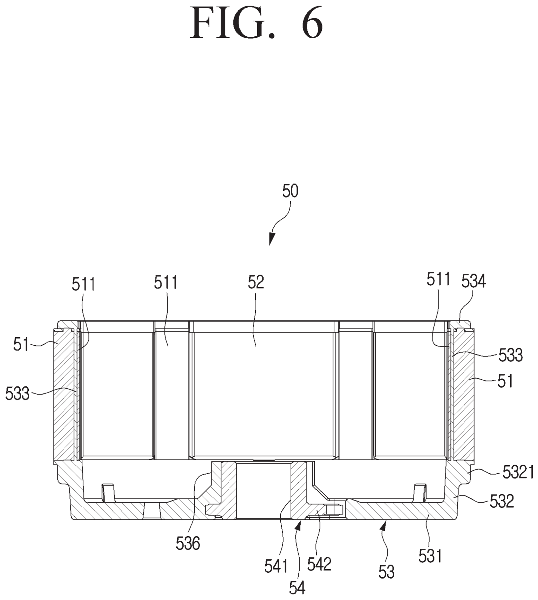

FIG. 6 is a cross-sectional view illustrating the outer rotor of FIG. 4 taken along line A-A.

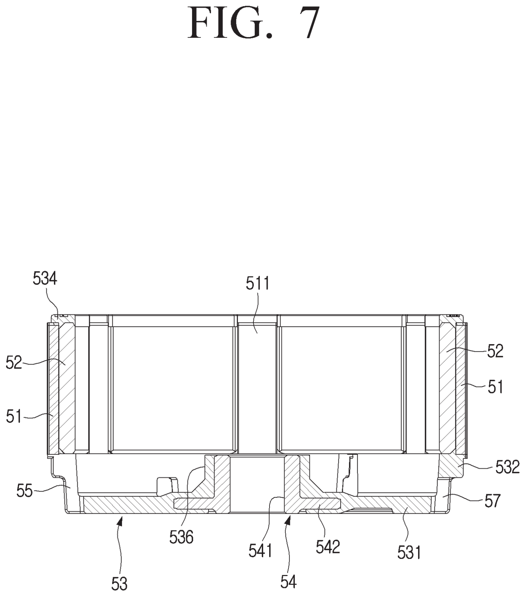

FIG. 7 is a cross-sectional view illustrating the outer rotor of FIG. 4 taken along line B-B.

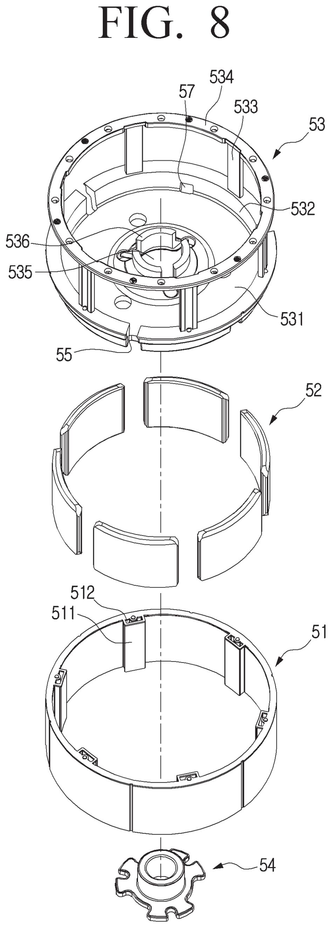

FIG. 8 is an exploded perspective view illustrating the outer rotor of FIG. 4.

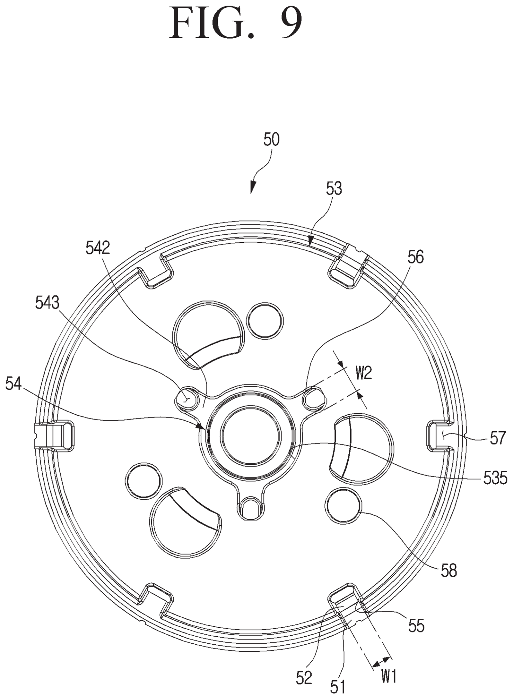

FIG. 9 is a bottom view of the outer rotor of FIG. 4.

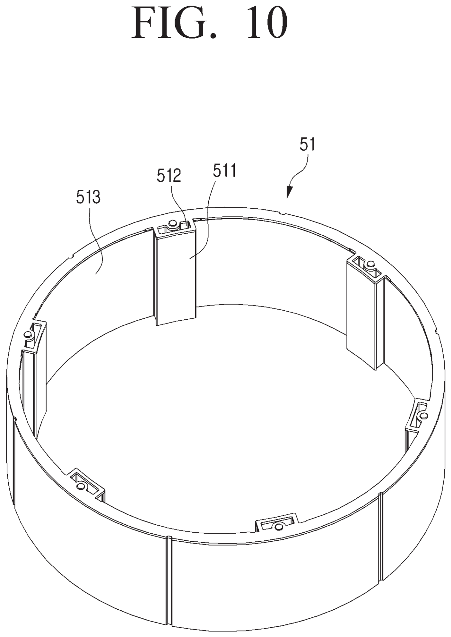

FIG. 10 is a perspective view illustrating a core of an outer rotor according to one or more embodiments of the disclosure.

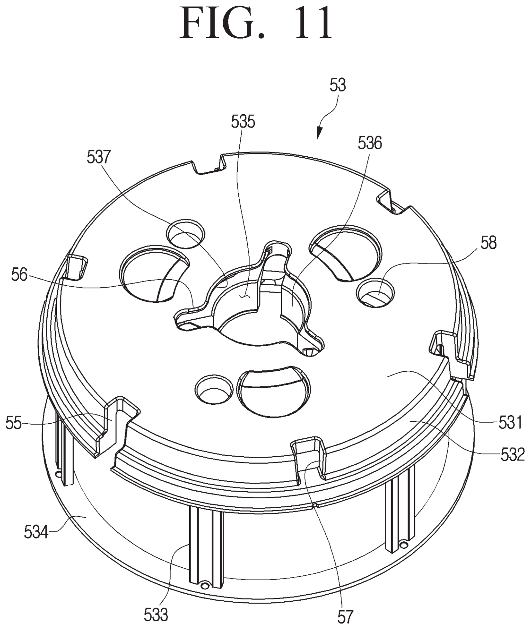

FIG. 11 is a perspective view illustrating a roof of an outer rotor according to one or more embodiments of the disclosure.

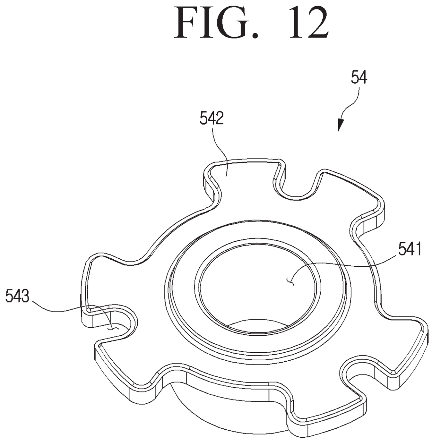

FIG. 12 is a perspective view illustrating a bush according to one or more embodiments of the disclosure.

The outer rotor 50 may be formed in a circular container shape. In other words, the outer rotor 50 may be formed in a hollow cylindrical shape with one end closed and the other end open.

Referring to FIGS. 4 to 9, the outer rotor 50 according to one or more embodiments of the disclosure may include a core 51, a plurality of permanent magnets 52, a roof 53, and a bush 54.

Referring to FIGS. 4, 8, and 10, the core 51 may be formed in a hollow cylindrical shape. The core 51 may be formed of metal. For example, the core 51 may be formed by laminating press-processed thin iron plates.

The core 51 may include a plurality of magnet supports 511. The plurality of magnet supports 511 may be formed on the inner circumferential surface of the core 51 at regular intervals. The plurality of magnet supports 511 may be formed to protrude from the inner circumferential surface of the core 51 toward the center of the core 51.

For example, the plurality of magnet supports 511 may be formed in a substantially rectangular parallelepiped shape. The plurality of magnet supports 511 may be formed to have the same length as the core 51. Each of the plurality of magnet supports 511 may include a through hole 512 formed in the longitudinal direction of the core 51. When the outer rotor 50 is formed by injection molding, the plurality of through holes 512 may be filled with resin.

Referring to FIGS. 4 and 8, the plurality of permanent magnets 52 may be disposed on the inner circumferential surface of the core 51. The plurality of permanent magnets 52 may be disposed at regular intervals along the inner circumferential surface of the core 51. Each of the plurality of permanent magnets 52 may be formed as a rectangular curved plate. Each of the plurality of permanent magnets 52 may be formed as a curved plate with a curvature corresponding to the curvature of the inner circumferential surface of the core 51.

The plurality of permanent magnets 52 may be disposed between the pluralities of magnet supports 511 formed on the inner circumferential surface of the core 51. For example, one permanent magnet 52 may be disposed between two adjacent magnet supports 511 among the plurality of magnet supports 511. Accordingly, a portion of the inner circumferential surface of the core 51 between the two adjacent magnet supports 511 forms a magnet installation surface 513 to which the permanent magnet 52 is attached. The outer surface of the permanent magnet 52 is in close contact with the magnet installation surface 513 of the core 51.

In the case of this embodiment of the disclosure, six magnet supports 511 are formed on the inner circumferential surface of the core 51, and six permanent magnets 52 are disposed on the six magnet installation surfaces 513 between the six magnet supports 511. However, the number of permanent magnets 52 is not limited to this. Depending on the required performance of the motor 30, the number of permanent magnets 52 may be determined in various ways.

Referring to FIGS. 4 to 8 and FIG. 11, the roof 53 may be disposed to cover one end of the core 51. The roof 53 may be formed in a circular container shape. For example, the roof 53 may be formed in a hollow cylindrical shape with one end closed.

The roof 53 may include a disk 531 and a skirt 532.

The skirt 532 extends vertically from the edge of the disk 531. The skirt 532 may be formed to have a step portion 5321. The step portion 5321 may be formed along the entire circumference of the skirt 532. The step portion 5321 may be formed to contact one end of the core 51. For example, the step portion 5321 of the skirt 532 may be formed to be thicker than one end of the skirt 532 that is in contact with the disk 531. When the skirt 532 is formed to have the step portion 5321, the weight of the roof 53 may be reduced and the strength of the roof 53 may be increased.

At least one outer notch 55 may be formed on the outer circumferential surface of the roof 53. The at least one outer notch 55 is formed to absorb circumferential deformation of the roof 53 due to temperature changes.

The at least one outer notch 55 may be formed on the outer circumferential surface of the roof 53 at a defined depth. The at least one outer notch 55 may be formed to expose a portion of the core 51 and the plurality of permanent magnets 52. In other words, one end of the core 51 and one end of the permanent magnet 52 in contact with the roof 53 may be exposed through the outer notch 55.

For example, the at least one outer notch 55 may be formed on the disk 531 and the skirt 532 of the roof 53. The outer notch 55 may be formed in a shape that penetrates the skirt 532 in the radial direction of the roof 53 and is recessed to a defined depth on the outer circumferential surface of the disk 531.

The outer notch 55 may be formed on the outer circumferential surface of the disk 531 to a depth corresponding to the thickness of the skirt 532. A portion of the outer notch 55 formed on the disk 531 may have a channel shape. In other words, the outer notch 55 formed on the disk 531 may have a U-shaped cross-sectional shape with a substantially flat bottom. A portion of the outer notch 55 formed in the skirt 532 may be formed to penetrate the skirt 532. Therefore, the inside and outside of the roof 53 may be communicated with each other through the outer notch 55.

The width W1 of the outer notch 55 may be determined depending on the diameter of the outer circumferential surface of the roof 53 and the amount of temperature change. For example, the outer notch 55 may be formed to have a width W1 of at least 1.0 mm. Here, the amount of temperature change refers to the change in the surrounding temperature of the outer rotor 50 while manufacturing the compressor 1.

In this embodiment of the disclosure, the roof 53 includes three outer notches 55. The three outer notches 55 may be formed at intervals of approximately 120 degrees. However, the number of outer notches 55 is not limited to this. If necessary, the roof 53 may include a varying number of outer notches 55.

A bush hole 535 may be formed in the center of the roof 53. The bush hole 535 may be formed to penetrate the roof 53 vertically. For example, the bush hole 535 may be formed to penetrate the disk 531 of the roof 53 vertically.

A support wall 536 that supports the bush 54 may be formed on the inner surface of the disk 531 of the roof 53. The support wall 536 may be formed around the bush hole 535. The length from the outer surface of the disk 531 to one end of the support wall 536 may be formed to be approximately equal to the length of the bush 54.

At least one inner notch 56 may be formed on the inner circumferential surface of the bush hole 535. The at least one inner notch 56 is formed to absorb circumferential deformation of the roof 53 due to temperature changes.

The at least one inner notch 56 may be formed to penetrate the roof 53 vertically. For example, the at least one inner notch 56 may be formed to penetrate the disk 531 of the roof 53 vertically. The at least one inner notch 56 may be formed to vertically penetrate the support wall 536 provided at the edge of the bush hole 535.

A bush groove 537 may be formed on the inner circumferential surface of the bush hole 535. The bush groove 537 may be formed on the inner circumferential surface of the bush hole 535 in the radial direction of the roof 53. For example, the bush groove 537 may be formed from the inner circumferential surface of the bush hole 535 to the inside of the disk 531. The bush groove 537 may be formed so that a flange 542 of the bush 54 is inserted into the bush groove 537. Accordingly, the bush groove 537 may be formed in a shape corresponding to the flange 542 of the bush 54.

When the bush 54 is disposed in the bush hole 535 of the roof 53, a portion of the bush 54 may be exposed through the at least one inner notch 56.

The at least one inner notch 56 may be formed in a channel shape. In other words, the inner notch 56 may be formed in a U-shaped cross-sectional shape with a substantially flat bottom.

The width W2 of the inner notch 56 may be determined depending on the diameter of the bush hole 535 of the roof 53 and the amount of temperature change. For example, the inner notch 56 may be formed to have a width of at least 0.2 mm.

In this embodiment of the disclosure, the roof 53 includes three inner notches 56. The three inner notches 56 may be formed approximately 120 degrees apart. However, the number of inner notches 56 is not limited to this. The roof 53 may include a varying number of inner notches 56, if desired.

The roof 53 may include a plurality of extension parts 533. The plurality of extension parts 533 may extend from one surface of the roof 53 in contact with the core 51. The plurality of extension parts 533 may be formed to pass through the through holes 512 of the plurality of magnet supports 511. In detail, the plurality of extension parts 533 may be formed to extend from the one surface of the skirt 532 of the roof 53 that contacts the core 51. The plurality of extension parts 533 may be extend vertically from the one surface of the skirt 532.

Openings are formed between the pluralities of extension parts 533. Accordingly, the plurality of magnets 52 may be disposed in the openings between the pluralities of extension parts 533.

In the case of this embodiment of the disclosure, because the core 51 includes six magnet supports 511, the roof 53 includes six extension parts 533. The six extension parts 533 may be formed at regular intervals in the circumferential direction of the disk 531 of the roof 53. For example, the six extension parts 533 may be spaced apart at intervals of approximately 60 degrees.

The roof 53 may include a support ring 534. The support ring 534 may be formed to support the plurality of permanent magnets 52.

The support ring 534 may be formed at the tips of the plurality of extension parts 533. The support ring 534 may be formed in a ring shape to cover the other end of the core 51 and the other ends of the plurality of permanent magnets 52. The support ring 534 may be formed in a shape corresponding to one surface of the skirt 532 that contacts one end of the core 51 and one ends of the plurality of permanent magnets 52. The support ring 534 may be formed parallel to one surface of the skirt 532. Accordingly, the six extension parts 533 may be formed between the skirt 532 and the support ring 534 of the roof 53.

The roof 53 may include a plurality of assembly holes 57 formed adjacent to the outer circumferential surface of the roof 53. In the case of this embodiment of the disclosure, the roof 53 includes three assembly holes 57. The three assembly holes 57 may be formed between the three outer notches 55. For example, the three assembly holes 57 may be formed at intervals of 120 degrees.

The assembly holes 57 may be formed in the skirt 532 of the roof 53. The assembly holes 57 may be formed to penetrate the skirt 532 of the roof 53 in the front-back direction. The assembly holes 57 may be formed to penetrate the upper side of the step portion 5321 of the skirt 532 of the roof 53. The assembly holes 57 may be formed so as not to penetrate the step portion 5321 of the skirt 532 of the roof 53. Grooves corresponding to the assembly holes 57 may be formed on the outer circumferential surface of the disk 531 of the roof 53.

The assembly holes 57 may be formed similarly to the outer notches 55. However, the assembly holes 57 are different from the outer notches 55 in that the assembly holes 57 do not penetrate the step portion 5321 of the skirt 532, so the core 51 and the permanent magnets 52 are not exposed through the assembly holes 57.

The assembly holes 57 may be used to secure the outer rotor 50 when assembling the outer rotor 50 and the stator 40. In addition, after assembling the outer rotor 50 and the stator 40, the assembly state of the outer rotor 50 and the stator 40 may be checked by inserting an inspection jig through the assembly holes 57. For example, the assembly holes 57 may be used to assemble the outer rotor 50 and the stator 40.

A plurality of noise holes 58 may be formed on one surface of the roof 53. The plurality of noise holes 58 may be formed in the disk 531 of the roof 53. The plurality of noise holes 58 may be formed around the bush hole 535. For example, the roof 53 may include three noise holes 58. The three noise holes 58 may be formed at intervals of approximately 120 degrees. The three noise holes 58 may be formed so as not to interfere with the three inner notches 56. The three noise holes 58 may be formed outside the three inner notches 56 based on the bush hole 535.

The plurality of noise holes 58 may function to reduce noise that may occur when the outer rotor 50 rotates. In addition, the plurality of noise holes 58 may function as oil discharge passages. For example, the oil inside the outer rotor 50 may be discharged to the outside of the outer rotor 50 through the plurality of noise holes 58.

The roof 53 may be formed of resin or plastic. For example, the roof 53 may be formed of a material different from the core 51 and the bush 54. In the case of this embodiment of the disclosure, the roof 53 is formed of polybutylene teleftite PBT.

In addition, the roof 53 may be formed of polycarbonate (PC), polyoxymethylene (POM), polyamide (PA), modified proline (PRO), acrylonitrile butadiene styrene (ABS), general purpose polystyrene (GPPS), high impact polystyrene (HIPS), high density polyethylene (HDPE), polypropylene (PP), phenol formaldehyde resin (PF), and the like.

The bush 54 may be disposed in the bush hole 535 of the roof 53.

Referring to FIGS. 4 to 9 and FIG. 12, the bush 54 may be formed in a hollow cylindrical shape. For example, a through hole 541 may be formed in the center of the bush 54. The through hole 541 of the bush 54 is formed so that the rotating shaft 60 may be inserted into the through hole 541. The outer rotor 50 may be coupled to the rotating shaft 60 by the bush 54. Accordingly, the outer rotor 50 may rotate integrally with the rotating shaft 60.

The flange 542 may be formed on the outer circumferential surface of the bush 54. The flange 542 may be formed at one end of the bush 54. The flange 542 may include at least one groove 543. The at least one groove 543 may be formed on the outer circumferential surface of the flange 542. The at least one groove 543 may be formed to penetrate the flange 542 vertically.

The bush 54 may be inserted into the bush hole 535 of the roof 53. The bush 54 may be supported by the support wall 536 of the roof 53. The flange 542 of the bush 54 may be inserted into the bush groove 537 formed on the inner circumferential surface of the bush hole 535 of the roof 53. The at least one groove 543 of the flange 542 may be disposed to coincide with the at least one inner notch 56 of the roof 53. Accordingly, the inside and outside of the outer rotor 50 may be communicated with each other through the at least one inner notch 56 of the roof 53 and the at least one groove 543 of the flange 542 of the bush 54.

The at least one groove 543 of the flange 542 may function as an oil discharge passage. For example, the oil inside the outer rotor 50 may be discharged to the outside of the outer rotor 50 through the at least one groove 543 of the flange 542.

In this embodiment of the disclosure, because the roof 53 includes three inner notches 56, the bush 54 includes three grooves 543 formed in the flange 542.

The bush 54 may be formed of a metal material. For example, the bush 54 may be formed of steel.

The roof 53 is coupled to the core 51, the plurality of magnets 52, and the bush 54, thereby forming the outer rotor 50. The roof 53 may be formed by injection molding resin or plastic. For example, the core 51, the plurality of permanent magnets 52, and the bush 54 are disposed in an injection mold for the outer rotor, and then, resin is injected into the injection mold, thereby forming the roof 53. The roof 53 may secure the core 51, the plurality of permanent magnets 52, and the bush 54. For example, the roof 53 may be formed as an injection thing.

The roof 53 may prevent the plurality of permanent magnets 52 from being separated and physically connect the core 51 and the bush 54 to transmit the rotational force generated by the plurality of permanent magnets 52 and the stator 40 to the rotating shaft 60.

The process of molding the outer rotor 50 by injecting the roof 53 is performed at high-temperature. For example, the injection process of the outer rotor 50 may be performed at a temperature about 60°C higher than room temperature.

In addition, after assembling the compressor 1 including the outer rotor 50, a drying process is performed in which the compressor 1 is dried in a drying furnace to remove moisture inside the compressor 1. For example, the drying process of the compressor 1 may be performed at a temperature of about 150°C higher than room temperature.

At this time, because the core 51 and the bush 54 are made of metal such as steel and the roof 53 is made of resin or plastic, the change in length of the core 51 and bush 54 due to temperature change is different from the change in length of the roof 53 due to temperature change. In general, resin or plastic has a coefficient of linear expansion about 10 times greater than that of metal. For example, when the temperature rises, the length by which the roof 53 is extended may be greater than the length by which the core 51 and the bush 54 are extended. Accordingly, cracks may occur at the portion of the roof 53 in contact with the core 51 and the portion of the roof 53 in contact with the bush 54 due to the difference in linear expansion coefficient.

Such cracks may occur when the outer rotor 50 used in the compressor 1 according to one or more embodiments of the disclosure does not include at least one outer notch 55 and at least one inner notch 56.

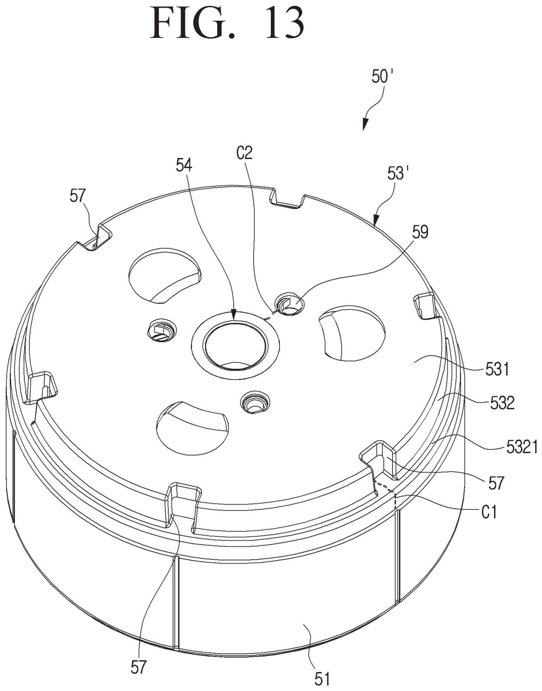

FIG. 13 is a perspective view illustrating an outer rotor without an outer notch 55 and an inner notch.

Referring to FIG. 13, the outer rotor 50' may include a core 51, a plurality of permanent magnets 52, a roof 53', and a bush 54.

The core 51, the plurality of permanent magnets 52, and the bush 54 are the same as those of the outer rotor 50 of the compressor 1 according to one or more embodiments of the disclosure described above.

The roof 53' may include six assembly holes 57 and three oil holes 59.

The six assembly holes 57 may be formed at regular intervals on the outer circumferential surface of the disk 531 of the roof 53'. The six assembly holes 57 may be formed at intervals of approximately 60 degrees. The upper surface of the step portion 5321 of the skirt 532 may be exposed through the six assembly holes 57.

The three oil holes 59 may be formed at regular intervals around the bush 54 of the roof 53'. The three oil holes 59 may be formed to correspond to the three grooves 543 of the flange 542 of the bush 54. The three oil holes 59 may be formed at intervals of approximately 120 degrees.

The roof 53' does not include at least one outer notch and at least one inner notch. Other than this, the roof 53' is the same as the roof 53 of the outer rotor 50 according to one or more embodiments of the disclosure described above.

As illustrated in FIG. 13, in the case where the roof 53' does not include at least one outer notch, during cooling of the outer rotor 50' after the injection process of the outer rotor 50' and during cooling of the compressor 1 after the drying process of the compressor 1, because the thermal expansion coefficient of the core 51 is small and the thermal expansion coefficient of the roof 53' is large, the contact portion of the roof 53' in contact with the core 51 is not deformed as much as the thermal expansion coefficient of the roof 53'. Accordingly, a crack C1 occurs in the portion of the roof 53' in contact with the core 51, for example, in FIG. 13, in the portion of the skirt 532 of the roof 53' in contact with the core 51 and where the assembly hole 57 is formed.

However, when at least one outer notch 55 is formed on the roof 53 as in the outer rotor 50 according to one or more embodiments of the disclosure, the outer circumferential surface of the roof 53 is not restricted by the core 51 and may be freely deformed by the width of at least one outer notch 55, so that the cracks may not occur on the outer circumferential surface of the roof 53. For example, because the outer notch 55 may absorb deformation in the circumferential direction of the roof 53, cracks may be prevented from occurring on the outer circumferential surface of the roof 53.

In addition, as illustrated in FIG. 13, in the case where the roof 53' does not include at least one inner notch, during cooling of the outer rotor 50' after the injection process of the outer rotor 50' and during cooling of the compressor 1 after the drying process of the compressor 1, because the thermal expansion coefficient of the bush 54 is small and the thermal expansion coefficient of the roof 53' is large, the contact portion of the roof 53' in contact with the bush 54 is not deformed as much as the thermal expansion coefficient of the roof 53'. Accordingly, a crack C2 occurs in the portion of the roof 53' in contact with the bush 54, for example, in the portion of the roof 53' between the oil hole 59 and the bush 54 in contact with the bush 54 in FIG. 13.

However, when at least one inner notch 56 is formed on the roof 53 as in the outer rotor 50 according to one or more embodiments of the disclosure, the inner circumferential surface of the bush hole 535 of the roof 53 is not restricted by the bush 54 and may be freely deformed by the width of at least one inner notch 56, so that cracks may not occur around the bush hole 535 of the roof 53. For example, because the inner notch 56 may absorb deformation in the circumferential direction of the roof 53, cracks may be prevented from occurring around the bush hole 535 of the roof 53.

By forming the outer rotor 50 as described above, the compressor 1 according to one or more embodiments of the disclosure may prevent cracks from occurring in the outer rotor 50. Therefore, it is possible to prevent air gap defects from occurring in the compressor 1 due to poor concentricity (run out) of the outer rotor 50.

In addition, the outer rotor 50 according to one or more embodiments of the disclosure may prevent cracks from occurring, thereby preventing imbalance of the outer rotor 50 due to cracks during operation of the compressor 1. Accordingly, it is possible to prevent the noise and vibration characteristics of the compressor 1 from deteriorating due to imbalance of the outer rotor 50.

In the above description, the reciprocating compressor is shown and described as an example of the compressor 1, but the disclosure is not limited to the reciprocating compressor. The disclosure may be applied to various types of compressors using an outer rotor motor with an outer rotor 50.

It will be appreciated that various embodiments of the disclosure according to the claims and description in the specification can be realized in the form of hardware, software or a combination of hardware and software.

Any such software may be stored in non-transitory computer readable storage media. The non-transitory computer readable storage media store one or more computer programs (software modules), the one or more computer programs include computer-executable instructions that, when executed by one or more processors of an electronic device, cause the electronic device to perform a method of the disclosure.

Any such software may be stored in the form of volatile or non-volatile storage, such as, for example, a storage device like read only memory (ROM), whether erasable or rewritable or not, or in the form of memory, such as, for example, random access memory (RAM), memory chips, device or integrated circuits or on an optically or magnetically readable medium, such as, for example, a compact disk (CD), digital versatile disc (DVD), magnetic disk or magnetic tape or the like. It will be appreciated that the storage devices and storage media are various embodiments of non-transitory machine-readable storage that are suitable for storing a computer program or computer programs comprising instructions that, when executed, implement various embodiments of the disclosure. Accordingly, various embodiments provide a program comprising code for implementing apparatus or a method as claimed in any one of the claims of this specification and a non-transitory machine-readable storage storing such a program.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. An outer rotor for a compressor comprising:
a core formed in a hollow cylindrical shape;
a plurality of permanent magnets disposed on an inner circumferential surface of the core;
a roof disposed to cover one end of the core and including a bush hole formed at a center of the roof; and
a bush disposed in the bush hole of the roof,
wherein the core and the bush are made of a metal material, and the roof is made of a resin material, and
wherein the roof includes:
at least one inner notch formed on an inner circumferential surface of the bush hole; and
at least one outer notch formed on an outer circumferential surface of the roof.

2. The outer rotor of a compressor of claim 1, wherein
the at least one outer notch is formed to expose a portion of the core and the plurality of permanent magnets.

3. The outer rotor of a compressor of claim 2, wherein
the at least one outer notch is formed in a channel shape and has a width of at least 1.0 mm.

4. The outer rotor of a compressor of claim 1, wherein
the at least one inner notch is formed to expose a portion of the bush.

5. The outer rotor of a compressor of claim 4, wherein
the at least one inner notch is formed in a channel shape and has a width of at least 0.2 mm.

6. The outer rotor of a compressor of claim 1, wherein
the at least one inner notch includes three inner notches.

7. The outer rotor of a compressor of claim 1, wherein
the at least one outer notch includes three outer notches.

8. The outer rotor of a compressor of claim 1, wherein
the core includes a plurality of magnet supports formed at regular intervals on an inner circumferential surface,
wherein each of the plurality of magnet supports includes a through hole formed in a longitudinal direction of the core, and
wherein the roof further comprises:
a plurality of extension parts extending from one surface of the roof in contact with the core and passing through holes of the plurality of magnet supports; and
a support ring having a ring shape and disposed at lower ends of the plurality of extension parts to cover another end of the core and other ends of the plurality of permanent magnets.

9. The outer rotor of a compressor of claim 1, wherein
the core and the bush are made of steel, and
the roof is made of polybutylene teleptite PBT.

10. The outer rotor of a compressor of claim 1, wherein
the roof includes a plurality of assembly holes formed adjacent to an edge thereof.

11. A compressor comprising:
a casing;
an outer rotor rotatably disposed inside the casing; and
a stator disposed inside the outer rotor,
wherein the outer rotor comprises:
a core formed in a hollow cylindrical shape;
a plurality of permanent magnets disposed on an inner circumferential surface of the core;
a roof disposed to cover one end of the core and including a bush hole formed at a center of the roof; and
a bush disposed in the bush hole of the roof,
wherein the core and the bush are made of a metal material, and the roof is made of a resin material,
wherein the roof includes:
at least one inner notch formed on an inner circumferential surface of the bush hole; and
at least one outer notch formed on an outer circumferential surface of the roof.

12. The compressor of claim 11, wherein
the at least one outer notch is formed to expose a portion of the core and the plurality of permanent magnets.

13. The compressor of claim 12, wherein
the at least one outer notch is formed in a channel shape and has a width of at least 1.0 mm.

14. The compressor of claim 11, wherein
the at least one inner notch is formed to expose a portion of the bush.

15. The compressor of claim 14, wherein
the at least one inner notch is formed in a channel shape and has a width of at least 0.2 mm.
